Europäisches Patentamt

European Patent Office

Office européen des brevets

(11) Numéro de publication: **0 443 482 A1**

# (12) DEMANDE DE BREVET EUROPEEN

(21) Numéro de dépôt: 91102263.0

(22) Date de dépôt: 18.02.91

(51) Int. Cl.⁵: **H04L 5/24**, H04L 5/14

(30) Priorité: 21.02.90 FR 9002123

(43) Date de publication de la demande:
28.08.91 Bulletin 91/35

(84) Etats contractants désignés:
AT BE CH DE DK ES FR GB IT LI NL SE

(71) Demandeur: ALCATEL BUSINESS SYSTEMS
12, rue de la Baume
F-75008 Paris(FR)

(72) Inventeur: Allouis, Jacques
1, rue Octave Landwerlin
F-67540 Ostwald(FR)
Inventeur: Medlicott, Mark
4, rue Victor-Hugo
F-67400 Illkirch(FR)
Inventeur: Penet, Xavier
77, rue des Charmilles
F-67400 Illkirch Graffenstaden(FR)

(74) Mandataire: Weinmiller, Jürgen et al
Lennéstrasse 9 Postfach 24
W-8133 Feldafing(DE)

(54) Agencement de raccordement de terminaux numériques à un même port ayant un débit supérieur.

(57) Agencement de raccordement destiné à permettre le raccordement de terminaux numériques (1A, 1B), à bas débit utile de données, à une interface de transmission (2), à haut débit, d'un port d'installation de télécommunication (4) qui est prévue pour desservir un terminal ayant un débit utile nettement supérieur, notamment dans le cas d'une transmission réalisée en mode asynchrone et à l'alternat. L'agencement comporte des moyens pour réserver des laps de temps égaux à chaque trame pour un échange à l'alternat entre l'interface à haut débit du port et chacun des terminaux à bas débit utile desservis par cette interface.

## FIG.3

# AGENCEMENT DE RACCORDEMENT DE TERMINAUX NUMÉRIQUES À UN MÊME PORT AYANT UN DÉBIT SUPÉRIEUR.

L'invention concerne un agencement destiné à permettre le raccordement de terminaux numériques à bas débit utile à un port d'une installation de télécommunication qui est prévu pour desservir un terminal ayant un débit utile nettement supérieur, notamment dans le cas d'une transmission réalisée en mode asynchrone et à l'alternat.

Les performances actuellement autorisées par les installations de télécommunication notamment au niveau des réseaux de connexion et des liaisons de transmission permettent la mise en communication de terminaux numériques, mono ou multiservices, à forts débits utiles.

Pour profiter au maximum et au meilleur coût des possibilités offertes, les ports de raccordement des terminaux aux installations sont initialement prévus pour pouvoir transmettre des données avec un débit maximal.

Chaque port comporte donc une interface numérique agencée pour permettre le raccordement d'un terminal dont le débit utile correspond éventuellement à ce débit maximal, ou à défaut un terminal compatible à débit utile plus faible. Ceci se traduit généralement par l'étude, la réalisation et la commercialisation d'interfaces plus ou moins différentes.

Or le prix de revient de ces interfaces, relativement complexes, se réduit en cas de standardisation, lorsque les quantités produites augmentent.

L'invention propose donc un agencement destiné à permettre le raccordement de terminaux numériques à bas débit utile de données à une interface de transmission d'un port d' installation de télécommunication qui est prévue pour desservir un terminal ayant un débit utile nettement supérieur, en particulier dans le cas d'une transmission réalisée en mode asynchrone et à l'alternat, et ceci afin de pouvoir exploiter les mêmes interfaces de transmission, au niveau des ports d'accès aux installations, pour différents terminaux ayant des débits en ligne compatibles. Selon une caractéristique de l'invention, l'agencement comporte des moyens pour réserver des laps de temps égaux à chaque trame pour un échange à l'alternat entre l'interface de transmission à haut débit du port et chacun des terminaux à bas débit utile desservis par cette interface.

L'invention ses caractéristiques et ses avantages sont décrits dans la description qui suit en liaison avec les figures évoquées ci-dessous.

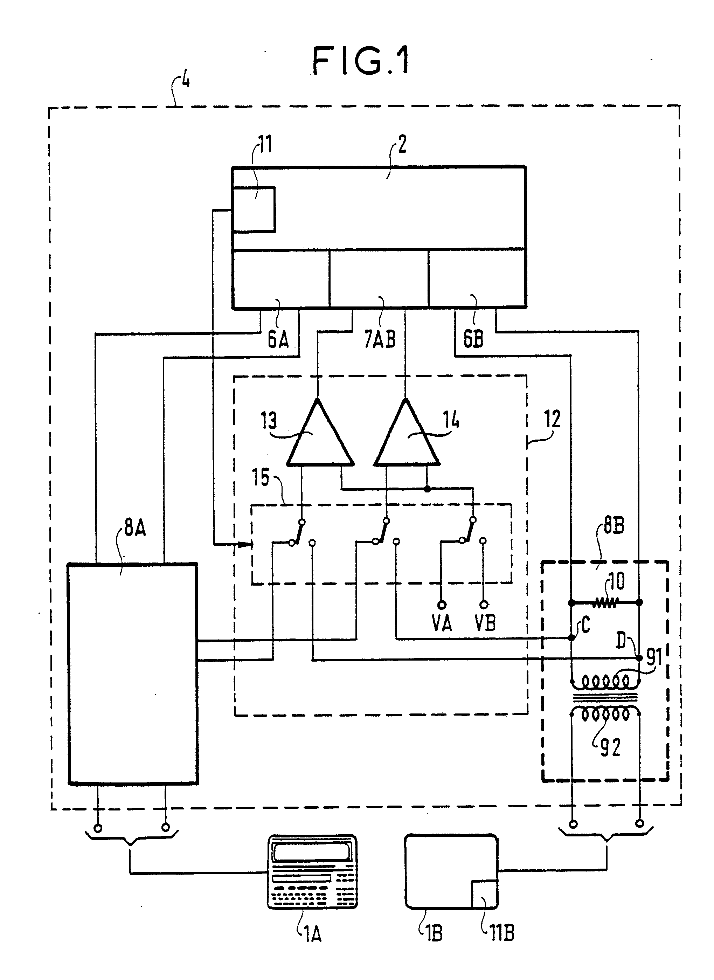

La figure 1 présente un schéma d'un agencement de raccordement selon l'invention.

La figure 2 présente un exemple de structure de trame classique pour liaison de transmission numérique point à point exploitée à l'alternat.

la figure 3 présente un exemple de structure de trame compatible avec la précédente destinée à la desserte d'au moins deux terminaux en parallèle en l'un des deux points d'une liaison de transmission numérique point à point exploitée à l'alternat.

L'agencement selon l'invention est prévu pour permettre le raccordement d'au moins deux terminaux numériques 1A, 1B à une interface 2 à fort débit d'un des ports pour terminaux d'une installation de télécommunication, par exemple un commutateur téléphonique. Ces ports pour terminaux donnent usuellement accès aux structures de connexion et de signalisation de l'installation qui sont par exemple de type bus ou réseau et qui permettent l'établissement de communications entre terminaux compatibles et l'échange de signalisations.

Une interface à fort débit telle que 2 est conçue pour pouvoir desservir un terminal à fort débit utile de données; dans le cas d'une transmission réalisée en mode asynchrone et à l'alternat, selon l'invention, cette interface est également susceptible de desservir des terminaux en parallèle, tels 1A et 1B, ayant des débits utiles notablement plus faibles que celui auquel ils se substituent.

Un grand nombre de ports de transmission numériques usuels sont conçus pour transmettre des données numériques de manière synchrone et/ou asynchrone, au cours de trames successives de même durée, elles-mêmes divisées en un même nombre d' intervalles de temps égaux réservés chacun pour la transmission d'un même nombre de données, par exemple un octet.

Tels sont par exemple les ports d'accès aux jonctions de transmission numérique dont les trames sont organisées selon la recommandation G.704 du Comité Consultatif International Télégraphique et Téléphonique (CCITT) et notamment pour les jonctions dont le débit en ligne est de 2,048 Mb/s.

La structure d'exploitation y repose sur une division du temps en une succession de trames qui ont une durée de 125$\mu$s et qui chacune sont divisées en trente deux intervalles de temps correspondant à autant de canaux isochrones de transmission.

Le premier intervalle de temps de chaque trame est réservé à la transmission d'octets de service et notamment aux bits de synchronisation de trame.

Les trames successives permettent de transmettre des octets de signaux synchrones, notamment des échantillons de signaux de parole pour une communication établie en temps réel, à partir du moment où un intervalle de temps est réservé au cours de chacune des trames successives pour la durée de la communication. Les intervalles de temps ayant même rang de trame au cours des trames successives définissent un canal susceptible d'être exploité à des fins de transmission numérique.

La trame évoquée ci-dessus permet aussi de transmettre des données de manière asynchrone sous forme de paquets ou de cellules, les octets de chaque paquet ou cellules sont classiquement précédés par des octets de service. Le premier intervalle de temps de chaque trame permet classiquement la transmission des bits de synchronisation de trame, un intervalle suivant étant usuellement affecté à la signalisation à transmettre.

Une telle structure de trame est notamment utilisée à l'alternat pour permettre les échanges entre deux unités émettrices-réceptrices, notamment entre l'interface 2 dont est doté un port et un terminal relié en point à point à cette interface.

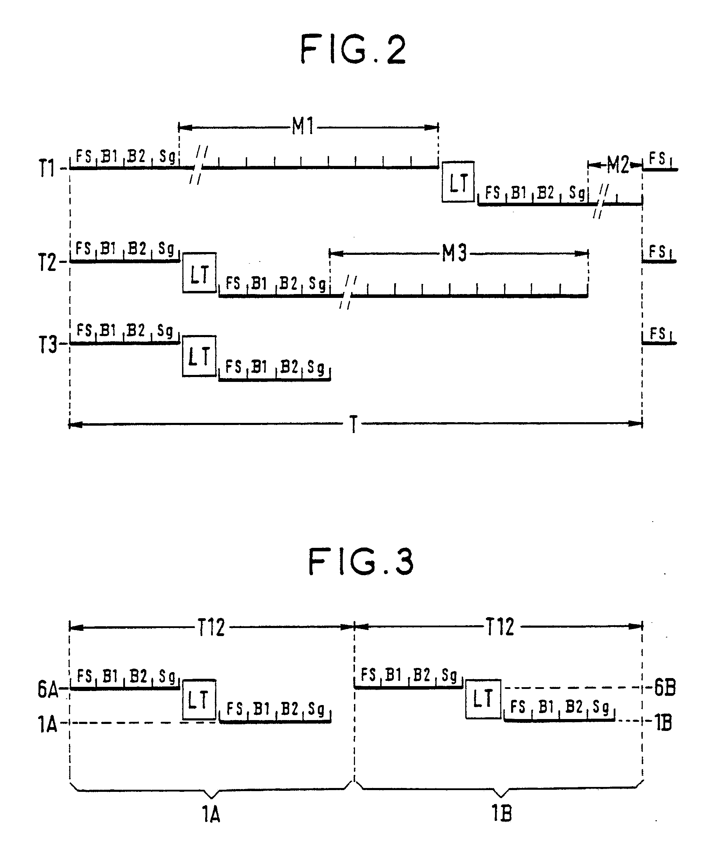

Dans une forme de réalisation symbolisée sur la figure 2, chaque unité émettrice émet, tour à tour et à chaque trame, une succession de données précédées d'un en-tête comportant des octets de service, classiquement un premier octet de synchronisation ici référencé FS, et au moins un octet de signalisation, référencé Sg, entre lesquels sont éventuellement prévus un nombre déterminé d'octets de signaux synchrones, référencés B1 pour un canal et B2 pour un autre. Les octets B1 sont par exemple des échantillons de parole, alors que les octets B2 sont par exemple des octets de données.

Le dernier octet Sg de l'en-tête pour une trame est suivi par un nombre limité d'octets de message ou de cellule, tels ceux du message M1, suivant les besoins et en fonction du temps de trame restant disponible pour l'unité émettrice active, par exemple l'interface 2, qui cesse alors d'émettre pour permettre au terminal d'émettre à son tour selon un processus identique ou similaire.

Chaque unité émettrice a donc la possibilité d'émettre une fois par trame, chacune des deux émissions de sens inverse étant séparées par un court laps de temps, référencé LT et dit de retournement de liaison, permettant de basculer alternativement chacune des deux unités émettrices d'un état actif à un état passif.

L'émission de chaque unité au cours des trames s'effectue au rythme fixé par une horloge qui est soit l'horloge 11 que comporte l'interface à haut débit 2, soit une horloge de même fréquence et éventuellement même phase, telle que 11B pour le terminal 1B, que comporte chacun des terminaux concernés.

Les émissions sont susceptibles de varier en durée suivant la longueur des messages à transmettre et cela depuis une valeur minimale correspondant à la seule émission des octets d'en-tête, comme indiqué en liaison avec les trames T1, T2,et T3 de la figure 2.

Il est éventuellement possible de raccorder une interface spécifiquement réalisée pour un unique terminal à bas débit utile, tel que 1A, à une interface à haut débit 2 a laquelle cette interface spécifique est reliée par la liaison 2, toutefois ceci conduit à exploiter à faible débit utile un port d'installation prévu pour de forts débits, ce qui n'est pas avantageux.

Par contre il est envisageable de raccorder plusieurs terminaux numériques à bas débit utile, à la même interface à haut débit 2, communément partagée, en répartissant les émissions relatives à ces terminaux, de manière que chacun puisse émettre et recevoir à chaque trame.

A cet effet, ainsi qu'on le voit sur la figure 3, une partie identique de trame est affectée à chaque terminal à bas débit utile, deux terminaux 1A et 1B ayant été prévus dans l'exemple choisi.

Au cours de la première partie de chaque trame de durée T, l'unité émettrice, classique et non figurée, contenue dans un terminal, tel 1A, et une unité émettrice 6A associée a l'interface à haut débit 3 dans une installation 4, sont alternativement activées et assurent successivement l'envoi de données binaires transcodées en code de transmission en ligne et organisées par octet vers respectivement une unité réceptrice 7AB associée à l'interface à haut débit 3 et une unité réceptrice non représentée du terminal 1A. Les deux émissions survenant successivement lors de cette première partie de trame, qui proviennent donc chacune d'une unité émettrice différente, sont séparées par un temps de retournement de liaison LT. Chaque émission comporte identiquement un en-tête dont la composition est identique à celle de l'en-tête évoqué plus haut, l'unité 6A étant supposée la première en émission sur la figure 3.

Une seconde unité émettrice 6B associée à l'interface 2 et l'unité émettrice, non représentée, du terminal 1B se partagent ici la seconde partie de chaque trame.

Comme dans le cas de la transmission évoquée ci-dessus, une des deux unités émettrices définies ci-dessus émet un en-tête éventuellement suivi des octets d'un paquet, en début de seconde moitié de trame, seuls les octets d'en-tête FS, B1, B2, Sg étant représentés en figure 3 tant pour les différentes premières demi-trames que pour les secondes .

Un temps LT après la fin de l'émission de Ta première unité, la seconde unité émet à son tour des octets d'en-tête éventuellement suivis d'octets de message aussi, l'unité émettrice 6B étant supposée première à émettre, avant l'unité émettrice du terminal 1B.

L'agencement de raccordement selon l'invention comporte donc une interface 2 à fort débit permettant de relier un des ports d'une installation 4 à des terminaux à faible débit utile, tels que 1A et 1B. Un exemple d'interface à haut débit 2 figure dans le brevet français 2 517 908 de la demanderesse, il ne sera donc pas développé ici dans la mesure où la structure de cette interface ne fait pas en elle-même l'objet de la présente invention.

L'interface 2 qui est prévue pour être desservie par une unité émettrice et par une unité réceptrice pour ses échanges avec un terminal à haut débit, est ici reliée à autant d'unités émettrices qu'il y a de terminaux à bas débit desservis, soit ici deux unités émettrices 6A et 6B, ainsi qu'à une unité réceptrice 7AB commune. Ces unités sont par exemple du type décrit dans le brevet français 2542531 de la demanderesse.

Chaque unité émettrice 6A, 6B est reliée ici par deux fils à une interface de ligne, telle 8A ou 8B, à laquelle vient se raccorder un terminal à bas débit utile 1A ou 1B. Chaque interface de ligne est agencée par exemple de la manière présentée en figure 3, les deux fils émanant de l'unité émettrice correspondante venant se raccorder chacun à une des deux bornes d'extrémité d'un premier enroulement 91 d'un transformateur. Le second enroulement 92 du transformateur est relié à l'unité émettrice et à l'unité réceptrice, non figurées, du terminal 1B, via une ligne bifilaire dont les deux fils aboutissent chacun à l'une des bornes d'extrémité de ce second enroulement.

L'unité émettrice et l'unité réceptrice de chaque terminal à bas débit utile sont par exemple du même type que Tes unités 6A, 7AB.

L'unité réceptrice 7AB est reliée par une unité de commutation 12 à chacune des interfaces de ligne 8A, 8B. Cette unité de commutation 12 se connecte aux deux entrées de l'unité réceptrice 7AB par deux comparateurs 13, 14 susceptibles d'être connectés chacun par une première entrée à une extrémité différente de premier enroulement 91 d'alternativement chacune des interfaces de ligne, par un organe de commutation 15. Ce dernier qui comporte autant d'états stables qu'il y a de terminaux desservis par l'interface à haut débit 2 considérée, relie aussi une seconde entrée de chacun des comparateurs 13 et 14 à un potentiel de référence, ici VA ou VB, fonction des caractéristiques de transmission de la ligne reliant chaque terminal à son interface de ligne. Une résistance 10 reliant les extrémités de l'enroulement 91, au delà des points de raccordement C, D communs à l'émetteur 6B et à l'unité de commutation 12, assure classiquement une adaptation d'impédance.

Les commutations de l'organe 15 sont commandées par l'horloge non représentée de l'interface à haut débit 2 qui fournit des signaux calés par rapport au signal de trame et dont la fréquence est un multiple de la fréquence de trame Te facteur de multiplication choisi étant égal au nombre de terminaux à bas débit utile simultanément desservis par l'interface haut débit considérée. Une intervention banale sur le logiciel de gestion de l'interface à haut débit 2 permet la prise en compte tant à l'émission qu'à la réception des octets respectivement échangés avec l'une ou l'autre des terminaux concernés pendant ici chacune des demi-trames successives.

Dans l'exemple proposé, une liaison unifilaire alimentée par tout ou rien suffit à relier cette horloge d'interface à haut débit 2 à l'organe de commutation 15.

En conséquence, les deux comparateurs 13 et 14 sont alternativement reliés une fois à chaque trame avec chacune des interfaces de ligne 8A ou 8B, à des fins de réception des bits en provenance du terminal 1A ou 1B relié à cette interface, pendant la demi-trame réservée au dialogue entre le terminal à bas débit utile considéré et l'interface à haut débit 2.

Cette dernière est activée en conséquence pour émettre successivement un en-tête éventuellement suivi d'octets de message, en début de chaque demi-trame et alternativement vers l'un puis l'autre des terminaux.

Le terminal 1A ou 1B destinataire émet à son tour vers l'unité réceptrice 7AB, au cours de la même demi-trame et après, d'une part, la fin de l'émission qui lui provient de l'unité émettrice 6A ou 6B à laquelle il est relié et, d'autre part, un délai correspondant au temps de retournement de liaison LT.

Une structure analogue et une répartition correspondante de la trame entre terminaux est susceptible d'être réalisée avec des terminaux dont la somme des débits est au plus égale au débit maximal admissible par l'interface à haut débit 2, cette somme de débits étant en fait nécessairement inférieure, dans la mesure où doivent être pris en compte les temps de commutation et de propagation, ainsi que des temps de retournements dans le cas d'une liaison à l'alternat.

Bien entendu certains terminaux peuvent avoir une structure d'émission simplifiée par exemple en l'absence de signaux isochrones ou en l'absence de données de paquets à transmettre. De même un même terminal peut éventuellement être relié à deux interfaces de ligne différentes reliées à une même interface à haut débit, si nécessaire.

## Revendications

1. Agencement de raccordement destiné à permettre le raccordement de terminaux numériques (1A, 1B), à bas débit utile de données, à une interface de transmission (2), à haut débit, d'un port d'installation de télécommunication (4) qui est prévue pour desservir un terminal ayant un débit utile nettement supérieur, notamment dans le cas d'une transmission réalisée en mode asynchrone et à l'alternat, caractérisé en ce qu'il comporte des moyens (11) pour réserver des laps de temps égaux à chaque trame pour un échange à l'alternat entre l'interface à haut débit du port et chacun des terminaux à bas débit utile desservis par cette interface.

2. Agencement de raccordement selon la revendication 1, caractérisé en ce qu'il comporte une interface de transmission (2), à haut débit, qui est dotée d'une unité réceptrice (7AB), commune, pour les données binaires provenant des terminaux (1A, 1B), à bas débit utile, desservis par cette interface de transmission et d'autant d'unités émettrices (6A, 6B) qu'il y a de terminaux à bas débit utile desservis, chaque unité émettrice étant reliée à une interface de ligne (8A, 8B) raccordée à un terminal, à bas débit utile, différent, l'unité réceptrice commune étant raccordée aux différentes interfaces de ligne en parallèle avec les unités émettrices et par l'intermédiaire d'une unité de commutation (12) apte à assurer successivement la mise en liaison de cette unité réceptrice avec chacune de interfaces de ligne .

3. Agencement de raccordement selon la revendication 2, caractérisé en ce que l'unité de commutation (12) est commandée par l'intermédiaire de signaux d'horloge émanant de l'interface de transmission (2) à haut débit.

# FIG.1

# FIG.2

# FIG.3

<table>
<tr><td colspan="2"><strong>Office européen<br>des brevets</strong></td><td><strong>RAPPORT DE RECHERCHE<br>EUROPEENNE</strong></td><td>Numéro de la demande<br><br><strong>EP 91 10 2263</strong></td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 292 686 (GTE LABORATORIES INC.)<br>* abrégé; figures 2, 7 * | 1-3 | H 04 L 5/24<br>H 04 L 5/14 |
| | – – – | | |
| A | US-A-3 866 175 (SEIFERT JR. ET AL.)<br>* abrégé * | 1-3 | |
| | – – – | | |
| A | PATENT ABSTRACTS OF JAPAN vol. 10, no. 16<br>(E-375)(2073) 22 janvier 1986,<br>& JP-A-60 178747 (MEIDENSHA K. K.) 12 septembre 1985,<br>* le document en entier * | 1-3 | |
| | – – – – – | | |

|  | DOMAINES TECHNIQUES RECHERCHES (Int. Cl.5) |
|---|---|
|  | H 04 L<br>H 04 Q |

Le présent rapport de recherche a été établi pour toutes les revendications

| Lieu de la recherche | Date d'achèvement de la recherche | Examinateur |
|---|---|---|
| La Haye | 02 mai 91 | SCRIVEN P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant